(19) Europäisches Patentamt
European Patent Office
Office européen des brevets

(11) EP 2 693 541 B1

(12) **EUROPEAN PATENT SPECIFICATION**

(45) Date of publication and mention of the grant of the patent:
**13.01.2021 Bulletin 2021/02**

(21) Application number: **12764855.8**

(22) Date of filing: **28.03.2012**

(51) Int Cl.:
***H01M 4/587*** *(2010.01)*
***H01M 4/133*** *(2010.01)*
***H01M 10/0525*** *(2010.01)*
***C01B 32/05*** *(2017.01)*
***C10G 9/00*** *(2006.01)*

(86) International application number:
**PCT/JP2012/058099**

(87) International publication number:
**WO 2012/133511 (04.10.2012 Gazette 2012/40)**

# (54) CARBON MATERIAL FOR NEGATIVE ELECTRODE OF LITHIUM ION SECONDARY BATTERY AND PRODUCTION METHOD THEREFOR

KOHLENSTOFFMATERIAL FÜR DIE NEGATIVELEKTRODE EINER LITHIUMIONEN-SEKUNDÄRBATTERIE UND HERSTELLUNGSVERFAHREN DAFÜR

MATÉRIAU DE CARBONE POUR ÉLECTRODE NÉGATIVE DE BATTERIE SECONDAIRE AU LITHIUM-ION, ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2011 JP 2011075111**

(43) Date of publication of application:
**05.02.2014 Bulletin 2014/06**

(73) Proprietor: **JX Nippon Oil & Energy Corporation**
**Chiyoda-ku**
**Tokyo 100-8162 (JP)**

(72) Inventors:
- **TANO, Tamotsu**
  **Tokyo 100-8162 (JP)**
- **OZAWA, Hiroshi**
  **Tokyo 100-8162 (JP)**
- **OYAMA, Takashi**
  **Tokyo 100-8162 (JP)**
- **SUZUKI, Takashi**
  **Tokyo 100-8162 (JP)**
- **NISHIDA, Masatoshi**
  **Tokyo 100-8162 (JP)**

(74) Representative: **Müller-Boré & Partner Patentanwälte PartG mbB**
**Friedenheimer Brücke 21**
**80639 München (DE)**

(56) References cited:
**EP-A1- 2 192 641**
**EP-A1- 2 211 403**
**EP-A1- 2 219 252**
**WO-A1-2011/034152**
**JP-A- 10 326 611**
**JP-A- 2009 076 209**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 693 541 B1

**Description**

The present invention relates to a carbon material used as a negative electrode material for a lithium ion secondary battery and relates to a production method therefor.

Lithium secondary batteries are light in weight and have high input and output characteristics compared to conventional secondary batteries such as nickel-cadmium batteries, nickel metal hydride batteries, and lead batteries so that they have been considered in recent years as promising power sources for electric vehicles and hybrid vehicles.

Such lithium secondary batteries usually comprise a lithium-containing positive electrode allowing reversible intercalation of lithium and a negative electrode comprising a carbon material. These electrodes are disposed opposite to each other via a non-aqueous electrolyte. Therefore, such batteries are assembled in a discharged state so that they cannot discharge without charging.

Hereinafter, a charge and discharge reaction will be described with, as an example, a lithium secondary battery comprising lithium cobaltate ($LiCoO_2$) as a positive electrode, a carbon material as a negative electrode, and a lithium-salt-containing non-aqueous electrolyte solution as an electrolyte.

First, during charging of a first cycle, lithium contained in the positive electrode is released to the electrolyte solution (Formula 1 below) and the positive electrode potential is shifted to the noble direction. At the negative electrode; lithium released from the positive electrode is occluded in the carbon material (Formula 2 below) and the negative electrode potential is shifted to a less noble direction. Usually, when a difference between the positive electrode potential and the negative electrode potential, that is, battery voltage, reaches a predetermined value, charging is terminated. This value is referred to as "charge termination voltage". During discharging, lithium occluded in the negative electrode is released, the negative electrode potential is shifted to a noble direction, the lithium is occluded in the positive electrode again, and the positive electrode potential is shifted to a less noble direction. Discharging, similar to charging, is also terminated when a difference between the positive electrode potential and the negative electrode potential, that is, the battery voltage, reaches a predetermined value. This value is referred to as "discharge termination voltage". The whole reaction formula of charging and discharging as described above is represented by Formula 3 below. In cycles after the first cycle, the charge and discharge reaction (cycle) proceeds by the migration of lithium between the positive electrode and the negative electrode.

[Chemical Formula 1]

$$LiCoO_2 \underset{\text{discharg}}{\overset{\text{charge}}{\rightleftarrows}} Li_{1-x}CoO_2 + xLi^+ \quad \text{----- Formula 1}$$

$$C + xLi^+ \underset{\text{discharg}}{\overset{\text{charge}}{\rightleftarrows}} Li_xC \quad \text{------Formula 2}$$

$$LiCoO_2 + C \underset{\text{discharg}}{\overset{\text{charge}}{\rightleftarrows}} Li_{1-x}CoO_2 + Li_xC \quad \text{-----Formula 3}$$

In general, carbon materials used as negative electrode materials in lithium secondary batteries are roughly classified into graphite-based ones and amorphous ones. Graphite-based carbon materials have an advantage of high energy density per unit volume compared to amorphous carbon materials. In view of this, graphite-based carbon materials are widely used as negative electrode materials in lithium ion secondary batteries for mobile phones and laptop computers that are compact but require large charge and discharge capacities. Graphite has a structure in which hexagonal network planes of carbon atoms have been stacked regularly one after another and during charging and discharging, intercalation and deintercalation of lithium ions takes place at the edges of the hexagonal network planes.

As described above, using lithium secondary batteries as an electric storage device for automobiles, industries, or power supply infrastructure has been studied intensively. When used for such purposes, they are required to have markedly high reliability compared with the case in which they are used for mobile phones or laptop computers. The

term "reliability" as used herein means a property related to product life, more specifically, a property not easily undergoing a change in charge/discharge capacity or internal resistance (i.e., not easily undergoing degradation) even when a charge and discharge cycle is repeated, even when the batteries are stored in charged state at a predetermined voltage, or even when they are charged continuously at a predetermined voltage (i.e., even when they are float-charged).

On the other hand, it is generally known that the life characteristics of lithium ion secondary batteries conventionally used for mobile phones or laptop computers largely depend on the material used as a negative electrode. The reason of it is because the charge/discharge efficiency in the positive electrode reaction (Formula 2) and the charge/discharge efficiency in the negative electrode reaction (Formula 3) cannot be made completely equal to each other in principle and the charge/discharge efficiency in the negative electrode is lower. The term "charge/discharge efficiency" as used herein means a ratio of an electric capacity which can be discharged to an electric capacity consumed for charging. A reaction mechanism causing deterioration in life characteristics due to the lower charge/discharge efficiency of the negative electrode reaction will hereinafter be described in detail.

During charging, as described above, lithium in the positive electrode is released (Formula 1) and occluded in the negative electrode (Formula 2). The electric capacity consumed for this charging is equal between the positive-electrode and negative-electrode reactions. However, the charge/discharge efficiency is lower in the negative electrode so that in the discharging reaction after the charging, discharging is terminated while a lithium amount released from the negative electrode is less than a lithium amount which can be occluded on the positive electrode, that is, a lithium amount which had been occluded on the positive electrode before the charging. The reason for this is because a part of the electric capacity which has been consumed at the negative electrode for charging is consumed for the side reaction and the competitive reaction and cannot be consumed for a lithium occlusion reaction, that is, an occlusion reaction as a dischargeable capacity.

As a result of such a charging and discharging reaction, the positive electrode potential when discharge is terminated is shifted to a direction nobler than the potential before the charging and discharging, and the negative electrode potential is also shifted to a direction nobler than the potential before the charging and discharging. This occurs because of the following reasons. All lithium which has been released during charging of the positive electrode cannot be occluded back into or (return to) the positive electrode. Accordingly, during discharging, although a positive electrode potential which has been shifted to a noble direction during the charging before the discharging is shifted to a less noble direction, the potential cannot return to the original positive electrode potential by an amount corresponding to a difference in charge/discharge efficiency between the positive electrode and the negative electrode. This leads to termination of the discharging at a potential more noble than the original positive electrode potential. As described above, discharging of a lithium secondary battery is completed at the time when a cell voltage (i.e., a difference between positive and negative electrode potentials) reaches a predetermined value (discharge termination voltage). So, when the positive electrode potential is shifted to the noble direction upon discharge termination, the negative electrode potential will be also shifted to the noble direction as well.

As described above, such batteries have a problem that when a charge/discharge cycle is repeated, an operation range of the capacity of the positive electrode and the negative electrode changes, resulting in degradation in capacity obtainable within a predetermined voltage range (or within a range of a discharge termination voltage and a charge termination voltage). Such a reaction mechanism of capacity degradation has already been reported in academic meetings or the like (for example, Non Patent Literature 1 and Non Patent Literature 2). When once operation ranges of the positive and negative electrode potentials change, such changes are irreversible and the operation ranges of the positive and negative electrode potentials will not return to the original ones in principal. Thus, there is no means for recovering the capacity, which has made the problem more serious.

The above reaction mechanism causing capacity degradation which occurs when the charge and discharge cycle is repeated is basically similar to a reaction mechanism which occurs when a battery is stored under a charged state or a reaction mechanism which occurs when a battery is float-charged. First, when a battery is stored under a charged state, it is known that a capacity lost by a side reaction and a competitive reaction which occur under a charged state (a self discharge amount) is greater in the negative electrode than in the positive electrode so that an operation range of the capacity of the positive and negative electrode changes between before and after storage and the battery capacity after storage decreases (for example, Non Patent Literature 3). A difference in self discharge rate between the positive and negative electrodes under a charged state owes to, similar to the above difference in charge/discharge efficiency between the positive and negative electrodes, the fact that a side reaction or competitive reaction rate at the negative electrode under a charged state is higher than a side reaction or competitive reaction rate at the positive electrode under a charged state.

Next, when a battery is float-charged, both the positive electrode and the negative electrode are charged respectively to have predetermined potentials continuously at the initial stage of charging. However, in fact, a current value (leakage current on the positive electrode side) necessary for keeping the positive electrode potential and a current value (leakage current on the negative electrode side) necessary for keeping the negative electrode potential are different. The reason for this is because as described above, self discharge rates under a charged state are different between

the positive electrode and the negative electrode and the self discharge rate of the negative electrode is greater. At the time of float charging, a leakage current on the negative electrode side becomes greater than a leakage current on the positive electrode side so that a negative electrode potential is shifted to the decreasing direction of a leakage current, that is, the noble direction and a positive electrode potential is shifted to the increasing direction of a leakage current, that is, the noble direction.

Thus, even if the battery is float-charged, an operation range of the capacity of the positive electrode and the negative electrode changes irreversibly, leading to degradation in battery capacity.

Patent Literature 1: Japanese Patent Laid-Open Publication No. 2009-87871

Non Patent Literature 1: Proceedings of the 48th Battery Symposium in Japan, 1A11, Nov. 13, 2007
Non Patent Literature 2: Proceedings of the 76th Meeting of the Electrochemical Society of Japan, 1P29, Mar. 26, 2009
Non Patent Literature 3: Proceedings of the 71st Meeting of the Electrochemical Society of Japan, 2I07, Mar. 24, 2004
Non Patent Literature 4: Proceedings of the 23rd Annual Meeting of the Carbon Society of Japan, 1C14, Dec. 3, 1996
Non Patent Literature 5: Proceedings of the 29th Annual Meeting of the Carbon Society of Japan, 2C08, Dec. 4, 2002
Non Patent Literature 6: Minoru Nakamizo, "TANSO", No. 90, pp.105, 1977
Non Patent Literature 7: J. O. Besenhard, M. Winter, J. Yang, W. Biberacher, J. Power Sources, 1995, Vol54, p228
Non Patent Literature 8: Proceedings of the 35th Battery Symposium in Japan, 2B04, Nov. 14, 1994

The present invention has been made for reducing capacity degradation of lithium ion secondary batteries. An object of the invention is to develop a carbon material for a negative electrode which is capable of maintaining a high level of charge/discharge capacity and suppressing capacity degradation which will occur due to repetition of a charge and discharge cycle, storage under a charged state, and float charging, thereby providing a negative electrode material for applications requiring high-level of reliability such as lithium ion secondary batteries for automobiles and power storage infrastructure.

Examples of the carbon material for a negative electrode of a lithium ion secondary battery proposed conventionally include graphite materials such as natural graphite, synthetic graphite and expanded graphite; a carbon material such as mesocarbon microbeads, mesophase pitch-based carbon fiber, vapor grown carbon fiber, pyrolytic carbon, petroleum coke, pitch-based coke and needle coke which have been subjected to carbonization; synthetic graphite materials produced by graphitization of these carbon materials; or a mixture thereof. However, it has been found that it is difficult to reduce capacity degradation of lithium ion secondary batteries by the use of these carbon materials.

Then, the present inventors have focused attention on a carbon material obtained from raw petroleum coke (raw coke materials) in order to solve the above problems. They have widely studied on raw coke materials obtained by delayed-coking of heavy oils, and the pulverizing, carbonizing, and graphitizing steps. Eventually, they have considered that a carbon material comprising excellent uniaxial orientation (crystallinity) and having a specific structure advantageous for diffusion of lithium can reduce capacity degradation of the lithium ion secondary battery. Then, they have focused on and studied the production mechanism of the carbon material.

For example, needle coke (one kind of raw coke materials s) is produced in such a manner that when a heavy oil is treated at high temperatures, thermal decomposition and polycondensation reactions will occur, liquid crystal spherules referred to as "mesophase" are formed, and the spherules coalesced to form a large liquid crystal referred to as "bulk mesophase" as an intermediate product.

In the process of thermal decomposition and polycondensation reactions, various decomposed gases or light distillates are produced by the decomposition and polycondensation, and a hydrogen gas is generated by the polycondensation reaction. Simultaneously, in conjunction with the phenomena, the mesophase is formed, grown, and coalesced by polymerization by radical reaction by decomposition or polycondensation reaction by dealkylation and dehydrogenation, resulting in production of raw coke.

The present inventors have employed a delayed coking method as a method for treating raw oil at high temperatures and widely studied on influences of the quantity of the gas generated in the coking step according to the selection of raw oil, the raw oil blend, and the operating conditions of the coker (particularly the ratio of specific gas composition and coke production quantity) and the following pulverization, carbonization, and graphitization on the chemical structure of the carbon material.

As a result, they have found that a predetermined carbon material capable of suppressing capacity degradation of the lithium ion secondary battery can be produced by pulverizing the raw coke obtained at the ratio of specific gas composition and coke production quantity according to the selection of raw oil, the raw oil blend, and the operating conditions of the coker so as to have a predetermined size, and carbonizing or graphitizing the resulting powder.

In a first aspect of the invention according to the present application, there is provided a carbon material for a negative electrode of a lithium ion secondary battery comprising: particles having an average particle diameter of 5 to

20 μm and having a structure which includes a plurality of stacked plates and is curved into a bow shape, the particles being of calcined coke or graphitized coke obtainable in a method comprising the steps of: subjecting a heavy oil to coking using a delayed coking method at a pressure of 400 to 800 kPa and at 400 to 600°C to form a raw coke material with generation of a hydrogen gas, a hydrocarbon gas having one carbon atom (C1 gas), and a hydrocarbon gas having two carbon atoms (C2 gas), wherein the ratio of the total of the generation rates (mass%) of the hydrogen gas, C1 gas, and C2 gas to the formation rate (mass%) of the raw coke material satisfies the condition: total of generation rates/formation rate = 0.30 to 0.60, pulverizing the raw coke material to obtain a raw coke material powder having an average particle size of 30 μm or less, calcining the raw coke material powder at 1000 to 1500°C for carbonization to obtain calcined coke, and optionally pulverizing and graphitizing the calcined coke at a temperature of 2200 to 2800°C to obtain graphitized coke, wherein, in each of the plates, an average plate thickness is defined as T, an average bow height including the plate thickness is defined as H, and an average length in the vertical direction is defined as L, L/T is 5.0 or more and H/T is from 1.10 to 1.25, and wherein the heavy oil is selected from the group consisting of desulfurized and deasphalted petroleum oil, hydrodesulfurized heavy oil, fluid catalytic cracking bottom oil, vacuum residual oil (VR), coal-liquefied oil, solvent extraction oil of coal, atmospheric residual oil, shale oil, tar sand bitumen, naphtha tar pitch, coal tar pitch, and heavy oils obtained by hydrorefining of the foregoing.

In a second aspect of the invention according to the present application, there is provided a method for producing a raw coke material used in a carbon material for a negative electrode of a lithium ion secondary battery, the method comprising the steps of: subjecting a heavy oil to coking using a delayed coking method at a pressure of 400 to 800 kPa and at 400 to 600°C to form the raw coke material with generation of a hydrogen gas, C1 gas, and C2 gas, wherein the ratio of the total of the generation rates (mass%) of the hydrogen gas, C1 gas, and C2 gas to the formation rate (mass%) of the raw coke material satisfies the condition: total of generation rates/formation rate = 0.30 to 0.60, wherein the heavy oil is selected from the group consisting of desulfurized and deasphalted petroleum oil, hydrodesulfurized heavy oil, fluid catalytic cracking bottom oil, vacuum residual oil (VR), coal-liquefied oil, solvent extraction oil of coal, atmospheric residual oil, shale oil, tar sand bitumen, naphtha tar pitch, coal tar pitch, and heavy oils obtained by hydrorefining of the foregoing.

In a third aspect of the invention according to the present application, there is provided a method for producing a carbon material for a negative electrode of a lithium ion secondary battery comprising the steps of: each step of the method for producing a raw coke material according to the second aspect to obtain the raw coke material; pulverizing the raw coke material to obtain a raw coke material powder having an average particle size of 30 μm or less; calcining the raw coke material powder at 1000 to 1500°C for carbonization to obtain calcined coke having an average particle diameter of 5 to 20 μm; and optionally pulverizing and graphitizing the calcined coke at a temperature of 2200 to 2800°C to obtain graphitized coke.

In a fourth aspect of the invention according to the present application, there is provided a lithium ion secondary battery using the carbon material for a negative electrode of a lithium ion secondary battery of the invention in the first aspect.

When the carbon material for a negative electrode of the present invention is used for lithium-ion secondary batteries, it is possible to achieve a high level of charge/discharge capacity and suppress capacity degradation which will occur due to repetition of a charge and discharge cycle, storage under a charged state, and float charging.

Fig. 1 is a pattern diagram showing a particle of the carbon material for a negative electrode of the present invention.

Fig. 2 (a) is a scanning electron microscope photograph of the carbon material for a negative electrode having a single bow plate-like shape.

Fig. 2 (b) is a pattern diagram showing the thickness of the plate, the height of the bow shape, and the length in the vertical direction as for the carbon material for a negative electrode of the present invention.

Fig. 3 is a schematic cross-sectional view of a cell used in the tests for evaluating the negative electrode material in Examples of the present application.

Fig. 4 is a schematic cross-sectional view of a cell used in the tests for evaluating the battery in Examples of the present application.

Hereinafter, the present invention will be described more in detail.

The heavy oil of the raw coke materials as a starting material of the carbon material for a negative electrode of the present invention include desulfurized and deasphalted petroleum oil, hydrodesulfurized heavy oil, fluid catalytic cracking bottom oil, vacuum residual oil (VR), coal-liquefied oil, solvent extraction oil of coal, atmospheric residual oil, shale oil, tar sand bitumen, naphtha tar pitch, coal tar pitch, and heavy oils obtained hydrorefining of the foregoing.

Among said materials, the desulfurized and deasphalted oil is produced by treating an oil such as vacuum residual oil with a solvent-deasphalting apparatus using propane, butane, pentane, or a mixture thereof as a solvent, removing the asphalt content, and desulfurizing the deasphalted oil (DAO) thus obtained so as to have preferably, a

sulfur content of 0.05 to 0.40 mass%.

Then, a hydrodesulfurized heavy oil having a sulfur content of 0.1 to 0.6 mass% is obtained by hydrodesulfurizing an atmospheric residual oil having a sulfur content of 2.0 to 5.0 mass% in the presence of a catalyst, for example, at a total pressure of 180 MPa, a hydrogen partial pressure of 160 MPa, a temperature of 380°C so as to have a hydrocracking rate of 25% or less.

The fluid catalytic cracking bottom oil is a bottom oil obtained from a fluid catalytic cracking (abbreviated as FCC) apparatus. The apparatus is a fluidized-bed fluid catalytic cracking apparatus which uses vacuum gas oil as raw oil and allows the oil to be selectively decomposed using a catalyst to produce high-octane FCC gasoline. Examples of the bottom oil from the residual fluid catalytic cracking (RFCC) apparatus include bottom oils produced by using a residual oil such as atmospheric residual oil, within the range of the reactor outlet temperature (ROT) of 510 to 540°C, to change the mass ratio of catalyst/oil within a range of 6 to 8.

The vacuum residual oil (VR) is bottom oil from a vacuum distillation apparatus which is produced by subjecting a crude oil to a reduced pressure of 10 to 30 Torr and changing the heating furnace outlet temperature in a range of 320 to 360°C.

As the method for converting heavy oil to raw coke materials by the coking, the delayed coking method is used. Specifically, the delayed coking method is a method comprising heat-treating heavy oil using a delayed coker under the pressurized conditions to obtain raw coke materials. The conditions of the delayed coker are as follows: pressure of 400 to 800 kPa and temperature of 400 to 600°C; and preferably treating time of 12 to 84 hours.

The total of the generation rate (mass%) of a hydrogen gas, a hydrocarbon gas having one carbon atom (C1 gas), and a hydrocarbon gas having two carbon atoms (C2 gas) to be generated by subjecting a heavy oil to coking in the present invention and the formation rate (mass%) of a raw coke materials satisfies the condition: total of generation rate/formation rate = 0.30 to 0.60.

The gases generated by the above coking include a hydrogen gas and C1-C4 gases. The C1-C4 gases are composed of a hydrocarbon compound having 1-4 carbon atoms. Examples thereof include paraffin hydrocarbons such as methane ($CH_4$), ethane (C2H6), propane ($C_3H_8$), and butane ($C_4H_{10}$); and olefin hydrocarbons such as ethylene ($C_2H_4$), propylene ($C_3H_6$), and butylene ($C_4H_8$). For example, single gases such as a butane gas and a butylene gas or mixed gases fall into the C4 gas.

The composition of the gas generated by the coking and the generation rate can be calculated using an integrated gas flowmeter, an integrated liquid flowmeter, and a process gas chromatograph in the delayed coker. The formation rate of the raw coke materials can be calculated by determining changes in the volume of the formed composition using a radiation level meter in the delayed coker chamber.

The generation rate (mass%) of the hydrogen gas and C1 and C2 gases can be calculated by calculating the weight of the generated gases from the quantity ($Nm^3$) of the gas generated for a predetermined time, the ratio of each component, and the molecular weight of each component and determining their ratios relative to the weight of raw oil kept for a predetermined time.

Further, the formation rate (mass%) of the raw coke materials can be calculated by calculating the formation weight from the volume ($m^3$) of the raw coke materials measured using the radiation level meter and the bulk density ($ton/m^3$), and determining its ratio relative to the weight of raw oil kept for a predetermined time.

In the present invention, the ratio of the total of the generation rate (mass %) of the hydrogen gas and C1 and C2 gases among the generated gases and the formation rate (mass %) of the raw coke materials is restricted. The ratio (total of generation rate/formation rate) can be achieved by controlling characteristics of heavy oil as a raw material and the operating conditions of the delayed coker (temperature and pressure). As an example, a relationship between the ratio and the temperature setting during operation of the delayed coker or raw oil will be additionally described.

A ratio of less than 0.30 is caused when the reaction temperature in the delayed coker is set to low to generate a mild decomposition reaction and a polycondensation reaction. In this case, the quantity of the gas generated by the decomposition and polycondensation reactions is small. Further, the growth of the mesophase itself to be formed by the decomposition and polycondensation reactions progresses gradually. Accordingly, a bulk mesophase having a large domain of optical anisotropy is formed so that a regular crystal arrangement can be obtained.

However, the gas is gradually generated and the quantity is small, and the raw coke materials having a structure including a plurality of stacked plates which are curved into a bow shape is restricted. Thus, the number of gaps formed at a portion being curved into a bow shape during carbonization or graphitization is small. Consequently, the capacity degradation of the battery will occur at the same level of the case of using conventional natural graphite or the like.

A ratio of greater than 0.60 is caused when the reaction temperature in the delayed coker is set to high to generate a vigorous decomposition reaction and a polycondensation reaction. In this case, the quantity of the gas generated by the decomposition and polycondensation reactions increases extremely. The mesophase generation occurs suddenly and the mesophase is coalesced before sufficient growth thereof. Further, the mesophase is coalesced in a vigorous turbulent flow due to the gas suddenly produced by decomposition generated simultaneously with the growth or coalescence. As a result, the raw coke materials do not exhibit a uniaxial orientation and has a random structure.

Thus, the regular crystal arrangement and the structure including a plurality of stacked plates which are curved into a bow shape are not given. The raw coke materials having a random structure easily cause capacity degradation of the battery.

As described above, when the ratio of the total generation rate and the formation rate is set to a predetermined ratio, the bulk mesophase is formed along a loophole in a uniaxial direction of the updraft of the gas generated simultaneously during polycondensation of the bulk mesophase for carbonization and solidification. As a result, the raw coke materials exhibit a uniaxial orientation. The following carbonization allows the carbon material to have particles having a structure including a plurality of stacked plates which are curved into a bow shape.

In order to set the generation rate/formation rate to a predetermined ratio, it is possible to appropriately select the type of raw oil (heavy oil), the raw oil blend, and the operating conditions of the delayed coker (pressure, temperature, etc.).

In order to obtain predetermined raw coke materials, preferably, the quantity of the generated gas, the composition of the generated gas, the generated amount of the raw coke materials in time intervals between the start and the end of the operation are collectively calculated, and the obtained values are reflected in the following operation.

The carbon material for a negative electrode of a lithium ion secondary battery according to the present invention can be prepared from the raw coke materials obtained by the delayed coking method under the above conditions.

The carbon material is particles having a structure including a plurality of stacked plates. The structure is curved into a bow shape.

Fig. 1 is a pattern diagram showing a particle of the carbon material for a negative electrode of the present invention. Each of the particles is uniaxially oriented and has a structure including a plurality of stacked plates having the structure curved into a bow shape.

When the raw coke material is carbonized or further graphitized, bonds among carbon atoms in network planes of the carbon material (in the direction of axis a) become strong covalent bonds. On the other hand, bonds in network layer planes (in the direction of axis c) become weak bonds because bonds by van der Waals force become dominant.

Thus, for example, like natural graphite, in the case of graphite particles having a structure in which a plurality of flat plates not being curved into a bow shape are stacked, the carbon crystal network planes are slipped due to the expansion and shrinkage caused by intercalation and deintercalation of lithium ions. This leads to the peeling between graphite particle layers and thin particles are newly formed. Accordingly, it is not possible to reproduce high charge and discharge characteristics.

On the other hand, in the case of using the carbon material having a structure including a plurality of stacked plates which are curved into a bow shape in the present invention, even in the expansion and shrinkage caused by intercalation and deintercalation of lithium, the portion curved into a bow shape works in suppressing the peeling due to the slipping. Thus, it is possible to significantly prevent thin particles from being newly formed by the slipped carbon graphite particles. As compared with the case of a flat-plate like structure, the expansion in the direction of axis c due to the intercalation of lithium in a battery cell is dispersed because of being curved into a bow shape. Thus, the expansion of the battery cell, the deformation and damage in the carbon material particles due to the pressure are largely reduced. The capacity degradation is reduced by these effects, resulting in high-level reliability. The term "reliability" used herein means a property related to product life, more specifically, a property not easily undergoing a change in charge/discharge capacity or internal resistance (i.e., not easily undergoing degradation) even when a charge and discharge cycle is repeated, even when the batteries are stored in charged state at a predetermined voltage, or even when they are charged continuously at a predetermined voltage (i.e., even when they are float-charged).

Fig. 2 (b) is a pattern diagram showing a single bow plate taken out from the structural model shown in Fig. 1. Fig. 2 (a) is a scanning electron microscope photograph of the single bow plate.

As shown in Fig. 2 (b), an average plate thickness is defined as T, an average bow height including the plate thickness is defined as H, and an average length in the vertical direction is defined as L, L/T is 5.0 or more and H/T is from 1.10 to 1.25.

The carbon material of the present invention contains the particles as shown in Fig. 1. Variations occur in the plate thickness, the bow height, and the length in the vertical direction. However, if the thickness, height, and length in particles are averaged, and L/T and H/T are within the above ranges, the effects of the present invention are exerted.

L/T influences battery capacity when forming a lithium ion secondary battery using a carbon material. When L/T is less than 5.0, uniaxial orientation (crystallinity) is insufficient. Since a structure having lithium-ion diffusion pathways regularly formed is not included, the capacity is poor.

H/T shows a distortion level due to the curve of the bow shape. When H/T is less than 1.10, the distortion due to the curve of the bow shape is small and the number of gaps decreases. This results in difficulty in diffusion of lithium ions. On the other hand, if H/T exceeds 1.25, the distortion due to the curve of the bow shape is too large. This results in easy breakage of the structure of the carbon material.

If L/T is 5.0 or more, a sufficient battery capacity can be ensured. If H/T is from 1.10 to 1.25, many fine gaps are generated without breaking the structure. This allows lithium ions to diffuse easily. As a result, the capacity degradation

of the lithium ion secondary battery can be reduced by satisfying these conditions.

The carbon material for a negative electrode of a lithium ion secondary battery, according to the present invention, can be produced by pulverizing the raw coke materials after the coking using the delayed coking method under the above conditions so as to have an average particle size of 30 μm or less and carbonizing the resulting powder.

The reason why the raw coke materials is pulverized so as to have an average particle size of 30 μm or less is that the carbon material after carbonization is made to have an average particle diameter of 5 to 20 μm (size generally used as a carbon material). The average particle size can be measured using a measurement device based on a laser diffraction scattering method.

After the above carbonization, the graphitization may be appropriately performed. Examples of the carbonization conditions include, but not limited to, conditions where the raw coke material is introduced into a rotary kiln or a shaft kiln and calcined at 1000 to 1500°C, more preferably at 1200°C to obtain calcined (carbonized) coke. Examples of the graphitization conditions include conditions where the calcined coke is pulverized and classified so as to have a predetermined particle size, and the resulting particles are graphitized in an Acheson furnace or the like at 2200 to 2800°C (for example, Patent Literature 1). In the present invention, the conditions where the graphitization is performed at 2300 to 2800°C are more preferred.

As the carbon material for a negative electrode of a lithium ion secondary battery, such a carbonized product (calcined product) or a product obtained by graphitizing the carbonized product is used.

Next, a method for producing a negative electrode for a lithium-ion secondary battery using the carbon material according to the present invention as well as a method for producing a lithium-ion secondary battery will be described.

A method for producing a negative electrode of a lithium ion secondary battery includes, but not limited to, pressure molding of a mixture (negative electrode mixture) containing the carbon material according to the present invention, a binder (binding agent), and, if necessary, a conductive aid and organic solvent into a predetermined size. Alternatively, a method for producing the negative electrode may include kneading of the carbon material according to the present invention, a binder (binding agent), a conductive aid, and the like in an organic solvent to obtain a slurry, rolling the slurry which has been applied and dried (negative electrode mixture) on the collector such as copper foil, and then cutting the roll into a predetermined size.

Examples of the binder (binding agent) include polyvinylidene fluoride, polytetrafluoroethylene, and SBR (styrene-butadiene rubber). A content of the binder in the negative electrode mixture may be set as needed in consideration of battery design to fall within a range of about 1 to 30 parts by mass based on 100 parts by mass of the carbon material.

Examples of the conductive aid include carbon black, graphite, acetylene black, indium-tin oxide exhibiting conductivity, and conductive polymers such as polyaniline, polythiophene and polyphenylenevinylene. The amount of the conductive aid used is preferably from 1 to 15 parts by mass based on 100 parts by mass of the carbon material.

Examples of the organic solvent include dimethylformamide, N-methylpyrrolidone, isopropanol, and toluene.

The carbon material and the binder and if necessary the conductive aid, and the organic solvent may be mixed using a known apparatus such as a screw-type kneader, ribbon mixer, universal mixer, or planetary mixer. The mixture thus obtained is then rolled or pressed to be molded. The pressure when rolling or pressing is preferably from about 100 to 300 MPa.

The material of the collector is not particularly limited and any material can be used insofar as it does not form an alloy with lithium. Examples thereof include copper, nickel, titanium, and stainless steel. The form of the collector is also not particularly limited and examples may include a foil, a perforated foil, or a mesh formed as a band. A porous material such as a porous metal (metal foam) or carbon paper may also be used.

Examples of the method for coating the collector with the slurry include, but not particularly limited to, known methods such as metal mask printing, electrostatic coating, dip coating, spray coating, roll coating, doctor blading, gravure coating, screen printing, and die coating. After coating, it is the common practice to carry out rolling treatment with a flat plate press, calender roll, or the like if necessary.

Also, integration of the collector with the slurry of the negative electrode slurry obtained in the form of a sheet, pellets, or the like may be carried out by a known method using, for example, a roll or press, or a combination thereof.

A lithium secondary battery using the carbon material for the negative electrode of a lithium ion secondary battery according to the present invention can be obtained, for example, by placing a negative electrode produced in the above manner and a positive electrode so as to face them to each other via a separator, and pouring an electrolyte solution between them.

Any active material may be used with no particular limitation for the positive electrode, and for example, a metal compound, metal oxide, metal sulfide or a conductive polymer material capable of doping or intercalating lithium ions may be used. Examples thereof include lithium cobaltate ($LiCoO_2$), lithium nickelate ($LiNiO_2$), lithium manganate ($LiMn_2O_4$), complex oxides ($LiCo_XNi_YMn_ZO_2$, X+Y+Z=1), lithium vanadium compounds, $V_2O_5$, $V_6O_{13}$, $VO_2$, $MnO_2$, $TiO_2$, $MoV_2O_8$, TiS2, $V_2S_5$, VS2, $MoS_2$, $MoS_3$, $Cr_3O_8$, $Cr_2O_5$, olivine-type $LiMPO_4$ (M:Co, Ni, Mn, Fe), conductive polymers such as polyacetylene, polyaniline, polypyrrole, polythiophene, and polyacene, and porous carbon, and mixtures thereof.

Usable examples of the separator include nonwoven fabrics, cloths and microporous films composed mainly

of a polyolefin such as polyethylene or polypropylene, and combinations thereof. It is not necessary to use a separator when the positive and negative electrodes of a lithium ion secondary battery are configured not to be in direct contact.

As the electrolyte solution and electrolyte used in the lithium secondary battery, a known organic electrolyte solution, an inorganic solid electrolyte, or a polymer solid electrolyte can be used. An organic electrolyte solution is preferred from the viewpoint of electrical conductivity.

Examples of the organic electrolyte solution include organic solvents, for example, ethers such as dibutyl ether, ethylene glycol monomethyl ether, ethylene glycol monoethyl ether, ethylene glycol monobutyl ether, diethylene glycol monomethyl ether, and ethylene glycol phenyl ether; amides such as N-methylformamide, N,N-dimethylformamide, N-ethylformamide, N,N-diethylformamide, N-methylacetamide, N,N-dimethylacetamide, N-ethylacetamide, and N,N-diethylacetamide; sulfur-containing compounds such as dimethyl sulfoxide and sulfolane; dialkylketones such as methyl ethyl ketone and methyl isobutyl ketone; cyclic ethers such as tetrahydrofuran and 2-methoxytetrahydrofuran; cyclic carbonates such as ethylene carbonate, butylene carbonate, propylene carbonate, and vinylene carbonate; linear carbonates such as diethyl carbonate, dimethyl carbonate, methylethyl carbonate, and methylpropyl carbonate; cyclic carboxylic acid esters such as $\gamma$-butyrolactone and $\gamma$-valerolactone; linear carbonic acid esters such as methyl acetate, ethyl acetate, methyl propionate, and ethyl propionate; N-methyl-2-pyrrolidinone; acetonitrile; and nitromethane. These solvents may be used alone or as a mixture of two or more thereof.

As a solute (electrolyte) of these solvents, various lithium salts may be used. Examples of a generally known lithium salt include $LiClO_4$, $LiBF_4$, $LiPF_6$, $LiAlCl_4$, $LiSbF_6$, LiSCN, LiCl, $LiCF_3SO_3$, $LiCF_3CO_2$, $LiN(CF_3SO_2)_2$, and $LiN(C_2F_5SO_2)_2$.

Examples of the polymer solid electrolyte include polyethylene oxide derivatives and polymers containing these derivatives, polypropylene oxide derivatives and polymers containing these derivatives, phosphoric acid ester polymers, and polycarbonate derivatives and polymers containing these derivatives.

There is absolutely no limitation on the selection of members which are other than those described above but necessary for constituting the battery.

The structure of the lithium ion secondary battery according to the present invention typically is not particularly limited. It is usually common practice to wind a positive electrode and a negative electrode, each in band form, in a spiral manner via a separator to form a wound electrode group, insert it in a battery case, and seal the case, or successively stack a positive electrode and a negative electrode, each in a flat plate form, via a separator to form a stacked polar plate group and encase it in an outer casing. Lithium secondary batteries are used, for example, as paper cells, button cells, coin cells, stacked cells, cylindrical cells, square cells, or the like.

## Examples

Hereinafter, the present invention will be more specifically described based on Examples and Comparative examples; however, the present invention is not limited thereto.

### 1. Raw coke materials and production of carbon material

#### (1) Example 1

A mixture of 40 mass% of desulfurized and deasphalted oil having a sulfur content of 0.05 to 0.40 mass% and 60 mass% of RFCC bottom oil was introduced into a delayed coker and subjected to coking at a temperature of 535°C and a pressure of 700 kPa in an inert gas atmosphere to obtain a raw coke materials.

The total of the generation rate of the hydrogen gas and C1 and C2 gases generated by the coking and the total ratio of the hydrogen gas and C1 and C2 gases among generated gases including a hydrogen gas and C1-C4 gases were calculated using an integrated gas flowmeter and a process gas chromatograph in the delayed coker. The formation rate of the raw coke materials was calculated by determining changes in the volume of the formed composition using a radiation level meter in the delayed coker chamber. More specifically, the generation rate (mass%) of the hydrogen gas and C1 and C2 gases was calculated by calculating the weight of the generated gas from the quantity ($Nm^3$) of the gas generated for a predetermined time, the ratio of each component, and the molecular weight of each component and determining their ratios relative to the weight of raw oil kept for a predetermined time. The formation rate (mass%) of the raw coke materials was calculated by calculating the formation weight from the volume ($m^3$) of the raw coke materials measured using the radiation level meter and the bulk density ($ton/m^3$), and determining its ratio relative to the weight of raw oil kept for a predetermined time.

The raw coke materials thus obtained was pulverized using a hammer mill, manufactured by SUS304 (hammer diameter: 500 mm) so as to have an average particle size of 30 $\mu$m or less. The resulting powder was calcined in a rotary kiln at 1200°C for 1 hour to prepare calcined coke. Further, the calcined coke was poured in a crucible and the crucible was set in an electric oven. It was graphitized at a maximum temperature of 2300°C in a nitrogen gas stream

of 80 L/min. At this time, the heating rate was 200°C/hour, the retention time of the maximum temperature was 10 minutes, and the cooling rate was 100°C/hour until 1000°C and then, it was allowed to cool to room temperature while maintaining the nitrogen gas stream. The resulting product was graphitized to prepare a carbon material for a negative electrode of a lithium ion secondary battery.

The scanning electron microscope photograph of the obtained carbon material was taken by SEM. As for the agglomerate having a structure including a plurality of stacked plates, in each plate, the average plate thickness (T), the average bow height including the plate thickness (H), and the average length in the vertical direction (L) were measured and L/T and H/T were calculated. Here, an SEM instrument (S-3400N, manufactured by Hitachi, Ltd.) was used. 3-nm resolution was obtained at an accelerating voltage 30 kV per hour and 10-nm resolution was obtained at an accelerating voltage of 3 kV.

Further, the average particle size was measured using a measurement device based on a laser diffraction scattering method.

The type of raw oil, operating conditions of the delayed coker, the ratio of the total generation rate and the formation rate, the graphitization temperature, and L/T and H/T of the carbon material are shown in Table 1.

(2) Example 2

A carbon material was produced under the same conditions of Example 1 except that the temperature of coking was set to 525°C.

(3) Example 3

A carbon material was produced under the same conditions of Example 1 except that the pressure of coking was set to 750 kPa.

(4) Example 4

A carbon material was produced under the same conditions of Example 1 except that a mixture subjected to coking was composed of 70 mass% of desulfurized and deasphalted oil and 30 mass% of RFCC bottom oil.

(5) Example 5

A carbon material was produced under the same conditions of Example 4 except that the temperature of coking was set to 525°C.

(6) Example 6

A carbon material was produced under the same conditions of Example 5 except that the highest achieving temperature in the graphitization was set to 2800°C.

(7) Example 7

A carbon material was produced under the same conditions of Example 5 except that the highest achieving temperature in the graphitization was set to 2500°C.

(8) Comparative example 1

A carbon material was produced under the same conditions of Example 1 except that the temperature of coking was set to 520°C.

(9) Comparative example 2

A carbon material was produced under the same conditions of Example 1 except that the temperature of coking was set to 540°C.

(10) Comparative example 3

A carbon material was produced under the same conditions of Example 1 except that the pressure of coking

was set to 600 kPa.

(11) Comparative example 4

A carbon material was produced under the same conditions of Example 4 except that the temperature of coking was set to 515°C.

(12) Comparative example 5

A carbon material was produced under the same conditions of Example 2 except that 100 mass% of RFCC bottom oil was used as raw material oil subjected to coking.

(13) Comparative example 6

A carbon material was produced under the same conditions of Example 1 except that 100 mass% of RFCC bottom oil was used as raw material oil subjected to coking.

(14) Comparative example 7

A carbon material was produced under the same conditions of Example 1 except that 100 mass% of vacuum residual oil (LSVR) was used as a raw material oil subjected to coking.

(15) Comparative example 8

A carbon material was produced under the same conditions of Comparative example 2 except that 100 mass% of vacuum residual oil (LSVR) was used as a raw material oil subjected to coking.

(16) Comparative example 9

A carbon material was produced under the same conditions of Example 1 except that 100 mass% of desulfurized and deasphalted oil was used as a raw material oil subjected to coking.

(17) Comparative example 10

A carbon material was produced under the same conditions of Example 3 except that the highest achieving temperature in the graphitization was set to 2200°C.

[Table 1]

| | Type of Heavy oil | Operating conditions | | Total generation rate and formation rate | Graphitization temperature (°C) | Physical properties of carbon materials | | | |
|---|---|---|---|---|---|---|---|---|---|
| | | Temperature (°C) | Pressure (kPa) | | | T (μm) | H (μm) | L/T | H/T |
| Example 1 | Desulfurized and deasphalted oil 40%+RFCC bottom oil 60% | 535 | 700 | 0.30 | 2300 | 2.0 | 2.4 | 9.0 | 1.20 |
| Example 2 | Desulfurized and deasphalted oil 40%+RFCC bottom oil 60% | 525 | 700 | 0.51 | 2300 | 1.7 | 2.0 | 9.5 | 1.18 |
| Example 3 | Desulfurized and deasphalted oil 40%+RFCC bottom oil 60% | 535 | 750 | 0.45 | 2300 | 2.8 | 3.3 | 6.0 | 1.18 |
| Example 4 | Desulfurized and deasphalted oil 70%+RFCC bottom oil 30% | 535 | 700 | 0.59 | 2300 | 0.8 | 0.9 | 40.0 | 1.13 |
| Example 5 | Desulfurized and deasphalted oil | 525 | 700 | 0.39 | 2300 | 4.0 | 4.5 | 6.0 | 1.13 |
| | 70%+RFCC bottom oil 30% | | | | | | | | |
| Example 6 | Desulfurized and deasphalted oil 70%+RFCC bottom oil 30% | 525 | 700 | 0.39 | 2800 | 4.0 | 4.6 | 6.0 | 1.15 |
| Example 7 | Desulfurized and deasphalted oil 70%+RFCC bottom oil 30% | 525 | 700 | 0.39 | 2500 | 4.0 | 4.6 | 6.0 | 1.15 |
| Comparative example 1 | Desulfurized and deasphalted oil 40%+RFCC bottom oil 60% | 520 | 700 | 0.29 | 2300 | 4.0 | 4.7 | 3.9 | 1.18 |
| Comparative example 2 | Desulfurized and deasphalted oil 40%+ RFCC bottom oil 60% | 540 | 700 | 0.54 | 2300 | 1.5 | 1.5 | 80.0 | 1.00 |
| Comparative example 3 | Desulfurized and deasphalted oil 40%+ RFCC bottom oil 60% | 535 | 600 | 0.25 | 2300 | 2.6 | 2.9 | 5.5 | 1.12 |
| Comparative example 4 | Desulfurized and deasphalted oil 70%+ RFCC bottom oil 30% | 515 | 700 | 0.29 | 2300 | 3.3 | 3.6 | 4.7 | 1.09 |
| Comparative example 5 | RFCC bottom oil 100% | 525 | 700 | 0.32 | 2300 | 2.8 | 3.6 | 5.1 | 1.29 |
| Comparative example 6 | RFCC bottom oil 100% | 535 | 700 | 0.25 | 2300 | 1.9 | 2.0 | 15.0 | 1.05 |

(continued)

| | Type of Heavy oil | Operating conditions | | Total generation rate and formation rate | Graphitization temperature (°C) | Physical properties of carbon materials | | | |
|---|---|---|---|---|---|---|---|---|---|
| | | Temperatu re (°C) | Pressur e (kPa) | | | T (μm) | H (μm) | L/T | H/T |
| Comparativ e example 7 | Vacuum residual oil LSVR 100% | 535 | 700 | 0.60 | 2300 | 1.5 | 1.5 | 60.0 | 1.00 |
| Comparativ e example 8 | Vacuum residual oil LSVR 100% | 540 | 700 | 0.62 | 2300 | 1.7 | 1.9 | 60.0 | 1.12 |
| Comparativ e example 9 | Desulfurized and deasphalted oil 100% | 535 | 700 | 0.62 | 2300 | 1.2 | 1.3 | 105.0 | 1.08 |
| Comparativ e example 10 | Desulfurized and deasphalted oil 40%+ RFCC bottom oil 60% | 535 | 750 | 0.45 | 2200 | 3.7 | 3.9 | 6.0 | 1.05 |

2. Production of cell for evaluating carbon material for negative electrode and evaluation method of characteristics

(1) Production of cell for evaluating carbon material for negative electrode

As a negative electrode material, the carbon material obtained in each of Examples 1 to 7 or Comparative examples 1 to 10, polyvinylidene fluoride (KF#9310, manufactured by Kureha Corporation) as a binder, and acetylene black ("Denka Black", manufactured by Denki Kagaku Kogyo Kabushiki Kaisha.) as a conductive material were mixed at a weight ratio of 90:2:8. N-methyl-2-pyrrolidinone was added to the resulting mixture, followed by kneading the mixture into a paste. The paste was applied to one side of an 18-μm thick copper foil and it was dried on a hotplate for 10 minutes, followed by rolling with a roll press. The sheet-like electrode thus obtained was punched out into a piece having a diameter of 15 mm and the piece was used as a working electrode. The resulting working electrode and the other necessary members were dried sufficiently and introduced into a glove box filled with an argon gas having a dew point of -100°C to assemble a cell for evaluating a negative electrode material. As a drying condition, the working electrode was dried at 150°C for 12 hours or more under reduced pressure, while the other members were dried at 70°C for 12 hours or more under reduced pressure.

Fig. 3 is a cross-sectional view of a cell 1 for evaluating a negative electrode material. The cell 1 for evaluation uses, as a container, a hollow metal body 2 inside of which can be maintained hermetically sealed with a packing 4 made of ethylene tetrafluoride. In the hollow metal body 2, a reference electrode 15 and the working electrode 7 obtained by the above steps were placed with a space therebetween. Next, a separator 9 made of a microporous film (#2400, manufactured by Cell Guard) having a diameter of 24 mm and made of polypropylene and a counter electrode 5 made of a disc-shaped lithium metal foil having a thickness of 0.7 mm and a diameter of 17 mm were stacked successively on these electrodes. The positional relationship upon stacking of the lithium metal foil over the working electrode was retained with a fixing jig 3 so as to encompass the outer periphery of the working electrode 7 with the outer periphery of the lithium metal foil formed when the lithium metal foil was projected to the working electrode side. Further, terminals 8, 10, and 12 extending from the counter electrode 5, the working electrode 7, and the reference electrode 15 toward the outside the metal frame 2 were provided, respectively.

Then, an electrolyte solution 6 was poured in the hollow metal body 3 and at the same time, the hollow metal body 3 was sealed so that the stack body was pressed with a spring 13 made of stainless via a stainless (SUS304) disc 11 having a thickness of 1 mm and a diameter of 20 mm and the reference electrode 15 obtained by winding a band-shaped lead plate (thickness: 50 μm, width: 3 mm) made of nickel with lithium metal was fixed in the vicinity of the working electrode 7, whereby the cell 1 for evaluating a negative electrode material was produced. The electrolyte solution 6 used was obtained by dissolving lithium hexafluorophosphate ($LiPF_6$) in a 3:7 (volume ratio) solvent mixture of ethylene carbonate and ethylmethyl carbonate to give a concentration of 1 mol/L.

(2) Charge and discharge test method of cell for evaluating negative electrode material

The cell for evaluating a negative electrode material was placed in a temperature controlled room at 25°C and a charge and discharge test was performed as described below. First, with the area of the working electrode as a standard, current was supplied between the counter electrode and the working electrode at a current value to give a current density of 0.1 mA/cm$^2$ (discharged), and lithium was doped into the working electrode until the potential of the working electrode against the reference electrode became 0.01 V. After a pause for 10 minutes, current was supplied at the same current value until the potential of the working electrode against the reference electrode became 1.2 V (charged), and lithium occluded in the working electrode was dedoped. The lithium doping capacity (mAh/g) and the lithium dedoping capacity (mAh/g) thus obtained was confirmed and a charge/discharge efficiency (%) of the initial charge and discharge cycle was calculated from these values in accordance with Formula below. The results of the lithium dedoping capacity and charge/discharge efficiency are shown in Table 2.

[Mathematical Formula 1]

$$\text{charge/discharge efficiency} = \frac{\text{lithium dedoping capacity}}{\text{lithium doping capacity}} \times 100$$

3. Production of battery and evaluation method of characteristics

(1) Production method of battery

Fig. 4 is a cross-sectional view of a cell 20 after production. A positive electrode 21 is a sheet electrode obtained

by mixing lithium nickelate ($LiNi_{0.8}Co_{0.15}Al_{0.05}O_2$, manufactured by Toda Kogyo Corp) serving as a positive electrode material and having an average particle size of 6 μm, polyvinylidene fluoride ("KF #1320", manufactured by Kureha Corporation) as a binder, and acetylene black ("Denka Black", manufactured by Denki Kagaku Kogyo Kabushiki Kaisha) as a conductive material at a weight ratio of 89:6:5, adding N-methyl-2-pyrrolidinone and kneading the resulting mixture into a paste, coating one side of a 30-μm thick aluminum foil with the resulting paste, drying the foil on a hotplate for 10 minutes, rolling the foil with a roll press, cutting the foil so that a coated portion had a size of 30 mm wide and 50 mm long. From a portion of this sheet electrode, the positive electrode mixture is scraped off in a direction perpendicular to the longitudinal direction of the sheet. The exposed aluminum foil is integrally connected to a collector 22 (aluminum foil) at the coated portion and plays a role as a positive electrode leads plate.

A negative electrode 23 is a sheet electrode obtained by mixing the carbon material obtained in each of Examples 1 to 7 or Comparative examples 1 to 11 as a negative electrode material, polyvinylidene fluoride ("KF#9310", manufactured by Kureha Corporation) as a binder, and acetylene black ("Denka Black", manufactured by Denki Kagaku Kogyo Kabushiki Kaisha) as a conductive material at a weight ratio of 90:2:8, adding N-methyl-2-pyrrolidinone and kneading the resulting mixture into a paste, coating one side of a 18-μm thick copper foil with the resulting paste, drying the foil on a hotplate for 10 minutes, rolling the foil with a roll press, and cutting the foil so that a coated portion had a size of 32 mm wide and 52 mm long. From a portion of this sheet electrode, the negative electrode mixture is scraped off in a direction perpendicular to the longitudinal direction of the sheet. The exposed copper foil is integrally connected to a collector 24 (copper foil) at the coated portion and plays a role as a negative electrode leads plate.

The battery 20 was produced by drying the positive electrode 21, the negative electrode 23, a separator 25, an exterior part 27, and another part sufficiently and introducing them in a glove box filled with an argon gas having a dew point of -100°C. The positive electrode 21 and the negative electrode 23 were dried at 150°C for 12 hours or more under reduced pressure, while the separator 25 and other members were dried at 70°C for 12 hours or more under reduced pressure.

The positive electrode 21 and the negative electrode 23 thus dried were stacked so that the coated portion of the positive electrode faced to the coated portion of the negative electrode with a microporous film (#2400, manufactured by Cell Guard) made of polypropylene therebetween and they were fixed with a polyimide tape. It is to be noted that the positive electrode and the negative electrode were stacked and faced to each other so that the peripheral portion of the positive electrode coated portion to be projected to the coated portion of the negative electrode is encompassed with the inner side of the peripheral portion of the negative electrode coated portion. A monolayer electrode body thus obtained was sealed in an aluminum laminate film and an electrolyte solution was poured. While the positive- and negative-electrode lead plates protrude outside, the laminate film was hot melted to obtain a hermetically closed type monolayer laminate-film battery. The electrolyte solution used was obtained by dissolving lithium hexafluorophosphate ($LiPF_6$) in a 3:7 (volume ratio) solvent mixture of ethylene carbonate and ethylmethyl carbonate to give its concentration of 1 mol/L.

(2) Evaluation method of battery

The battery thus obtained was placed in a temperature controlled room at 25°C and a charge-discharge test was performed as described below.

First, the battery was charged with a constant current of 1.5 mA until the battery voltage reached 4.2 V. After a pause for 10 minutes, the battery was discharged with the same constant current until the battery voltage reached 3.0 V and this charge and discharge cycle was repeated 10 times. This charge and discharge cycle was performed to detect the abnormality of the battery so that it was not included in the number of cycles of the charge and discharge cycle test. It was found that all the batteries produced in the present examples and comparative examples showed no abnormality. Then, the following test was performed.

As the test, the battery was charged with a constant current of 75 mA until the battery voltage reached 4.2 V. After a pause for 1 minute, the battery was discharged with the same constant current (75 mA) until the cell voltage reached 3.0 V and this charge and discharge cycle was repeated 1000 times. The first cycle discharge capacity was designated as "initial discharge capacity". A ratio (%) of the 1000-th cycle discharge capacity relative to the initial discharge capacity was calculated as a capacity-maintenance ratio of the charge and discharge cycle. The results of the capacity-maintenance ratio of charge and discharge cycle are shown in Table 2.

[Table 2]

| | Test for evaluating carbon material for negative electrode | | Cycle test Capacity-maintenance ratio (%) |
|---|---|---|---|
| | Li dedoping capacity (mAh/g) | Charge and discharge efficiency (%) | |
| Example 1 | 317 | 91 | 88 |

(continued)

| | Test for evaluating carbon material for negative electrode | | Cycle test Capacity-maintenance ratio (%) |
|---|---|---|---|
| | Li dedoping capacity (mAh/g) | Charge and discharge efficiency (%) | |
| Example 2 | 319 | 90 | 86 |
| Example 3 | 315 | 90 | 87 |
| Example 4 | 305 | 93 | 92 |
| Example 5 | 310 | 90 | 90 |
| Example 6 | 320 | 90 | 85 |
| Example 7 | 314 | 90 | 88 |
| Comparative example 1 | 270 | 90 | 86 |
| Comparative example 2 | 300 | 84 | 72 |
| Comparative example 3 | 290 | 83 | 76 |
| Comparative example 4 | 275 | 87 | 74 |
| Comparative example 5 | 265 | 88 | 80 |
| Comparative example 6 | 300 | 84 | 70 |
| Comparative example 7 | 297 | 83 | 71 |
| Comparative example 8 | 301 | 85 | 73 |
| Comparative example 9 | 300 | 84 | 69 |
| Comparative example 10 | 270 | 90 | 86 |

In the carbon materials in the Examples and the Comparative examples excluding Comparative examples 2 and 7, H has a value higher than T. Hence, it is clear that each of the carbon materials has the structure curved into a bow shape. On the other hand, in the carbon materials of Comparative examples 2 and 7, T has the same value as H. Hence, each of the materials had a flat plate-like structure, not being curved (Table 1).

As shown in Examples 1 to 7, in each of the lithium ion secondary batteries using each of the carbon materials obtained by the delayed coking method under the condition: total of generation rate/formation rate = 0.30 to 0.60 where L/T is 5.0 or more and H/T is from 1.10 to 1.25, the Li dedoping capacity is high. Because of that, the discharge capacity of the negative electrode was high, and the charge/discharge efficiency and the cycle capacity-maintenance ratio were excellent (Table 2).

On the other hand, as shown in Comparative examples 1 to 10, in the case of each lithium ion secondary battery using each carbon material which does not satisfy any one of the conditions: total of generation rate/formation rate = 0.30 to 0.60; L/T is 5.0 or more; and H/T is from 1.10 to 1.25, any of the Li dedoping capacity, the charge/discharge efficiency, and the cycle capacity-maintenance ratio was poor as compared with the examples (Table 2).

From the above results, it is clear that a lithium ion secondary battery using the carbon material for a negative electrode according to the present invention as a negative electrode has a high charge/discharge capacity at the negative electrode and is excellent in cycle characteristics.

A lithium ion secondary battery using the carbon material according to the present invention can reduce the capacity degradation and have a high level of reliability from the viewpoint of cycle characteristics. Therefore, it can be

used industrially in automobiles, specifically, plug-in hybrid vehicles, or electric vehicles, or for power storage infrastructure.

Reference Signs List

| | |
|---|---|
| 1 | cell for evaluating negative electrode material |
| 2 | hollow metal body |
| 3 | fixing jig |
| 4 | packing |
| 5, 21 | counter electrode (positive electrode) |
| 6 | electrolyte solution |
| 7, 23 | working electrode (negative electrode) |
| 8, 10, 12 | terminal |
| 9, 25 | separator |
| 11 | plate for fixing counter electrode |
| 13 | spring |
| 15 | reference electrode |
| 20 | battery |
| 22 | positive electrode collector |
| 24 | negative electrode collector |
| 27 | exterior part |

## Claims

**1.** A carbon material for a negative electrode of a lithium ion secondary battery comprising:

particles having an average particle diameter of 5 to 20 μm and having a structure which includes a plurality of stacked plates and is curved into a bow shape, the particles being of calcined coke or graphitized coke obtainable in a method comprising the steps of:

subjecting a heavy oil to coking using a delayed coking method at a pressure of 400 to 800 kPa and at 400 to 600°C to form a raw coke material with generation of a hydrogen gas, a hydrocarbon gas having one carbon atom (C1 gas), and a hydrocarbon gas having two carbon atoms (C2 gas), wherein the ratio of the total of the generation rates (mass%) of the hydrogen gas, C1 gas, and C2 gas to the formation rate (mass%) of the raw coke material satisfies the condition: total of generation rates/formation rate = 0.30 to 0.60,
pulverizing the raw coke material to obtain a raw coke material powder having an average particle size of 30 μm or less,
calcining the raw coke material powder at 1000 to 1500°C for carbonization to obtain calcined coke, and
optionally pulverizing and graphitizing the calcined coke at a temperature of 2200 to 2800°C to obtain graphitized coke,

wherein, in each of the plates, an average plate thickness is defined as T, an average bow height including the plate thickness is defined as H, and an average length in the vertical direction is defined as L,
L/T is 5.0 or more and H/T is from 1.10 to 1.25, and
wherein the heavy oil is selected from the group consisting of desulfurized and deasphalted petroleum oil, hydrodesulfurized heavy oil, fluid catalytic cracking bottom oil, vacuum residual oil (VR), coal-liquefied oil, solvent extraction oil of coal, atmospheric residual oil, shale oil, tar sand bitumen, naphtha tar pitch, coal tar pitch, and heavy oils obtained by hydrorefining of the foregoing.

**2.** A method for producing a raw coke material used in a carbon material for a negative electrode of a lithium ion secondary battery, according to claim 1 the method comprising the steps of: subjecting a heavy oil to coking using a delayed coking method at a pressure of 400 to 800 kPa and at 400 to 600°C to form the raw coke material with generation of a hydrogen gas, C1 gas, and C2 gas, wherein the ratio of the total of the generation rates (mass%) of the hydrogen gas, C1 gas, and C2 gas to the formation rate (mass%) of the raw coke material satisfies the condition: total of generation rates/formation rate = 0.30 to 0.60,

wherein the heavy oil is selected from the group consisting of desulfurized and deasphalted petroleum oil, hydrodesulfurized heavy oil, fluid catalytic cracking bottom oil, vacuum residual oil (VR), coal-liquefied oil, solvent extraction oil of coal, atmospheric residual oil, shale oil, tar sand bitumen, naphtha tar pitch, coal tar pitch, and heavy oils obtained by hydrorefining of the foregoing.

**3.** A method for producing a carbon material for a negative electrode of a lithium ion secondary battery according to claim 1 comprising the steps of:

each step of the method for producing a raw coke material according to claim 2 to obtain the raw coke material;
pulverizing the raw coke material to obtain a raw coke material powder having an average particle size of 30 μm or less;
calcining the raw coke material powder at 1000 to 1500°C for carbonization to obtain calcined coke having an average particle diameter of 5 to 20 μm; and
optionally pulverizing and graphitizing the calcined coke at a temperature of 2200 to 2800°C to obtain graphitized coke.

**4.** The method for producing a carbon material for a negative electrode of a lithium ion secondary battery according to claim 3, wherein the temperature in the step of graphitizing is from 2300 to 2800°C.

**5.** A lithium ion secondary battery using the carbon material for a negative electrode of a lithium ion secondary battery according to claim 1.

## Patentansprüche

**1.** Kohlenstoffmaterial für eine negative Elektrode einer Lithiumionen-Sekundärbatterie, umfassend:

Teilchen mit einem durchschnittlichen Teilchendurchmesser von 5 bis 20 μm und einer Struktur, welche eine Mehrzahl an gestapelten Platten enthält und in eine Bogenform gekrümmt ist, wobei die Teilchen aus kalziniertem Koks oder graphitiertem Koks sind, der in einem Verfahren erhältlich ist, das die folgenden Schritte umfasst:

Aussetzen eines Schweröls einer Verkokung unter Verwendung eines verzögerten Verkokungsverfahrens bei einem Druck von 400 bis 800 kPa und bei 400 bis 600°C, um ein rohes Koksmaterial unter Erzeugung eines Wasserstoffgases, eines Kohlenwasserstoffgases mit einem Kohlenstoffatom (C1-Gas) und eines Kohlenwasserstoffgases mit zwei Kohlenstoffatomen (C2-Gas) zu bilden, wobei das Verhältnis der Summe der Erzeugungsraten (Massen-%) des Wasserstoffgases, des C1-Gases und des C2-Gases zur Bildungsrate (Massen-%) des rohen Koksmaterials die Bedingung erfüllt: Summe der Erzeugungsraten/Bildungsrate = 0,30 bis 0,60,
Pulverisieren des rohen Koksmaterials, um ein rohes Koksmaterialpulver mit einer durchschnittlichen Teilchengröße von 30 μm oder weniger zu erhalten,
Kalzinieren des rohen Koksmaterialpulvers bei 1000 bis 1500°C zur Karbonisierung, um kalzinierten Koks zu erhalten, und
gegebenenfalls Pulverisieren und Graphitisieren des kalzinierten Kokses bei einer Temperatur von 2200 bis 2800°C, um graphitierten Koks zu erhalten,

wobei in jeder der Platten eine durchschnittliche Plattendicke als T definiert ist, eine durchschnittliche Bogenhöhe einschließlich der Plattendicke als H definiert ist und eine durchschnittliche Länge in vertikaler Richtung als L definiert ist,
L/T ist 5,0 oder mehr und H/T ist von 1,10 bis 1,25 und
wobei das Schweröl ausgewählt ist aus der Gruppe, bestehend aus entschwefeltem und entasphaltiertem Erdöl, hydrodesulfuriertem Schweröl, flüssigem katalytischem Crackbodenöl, Vakuumrestöl (VR), kohleverflüssigtem Öl, Lösungsmittelextraktionsöl von Kohle, atmosphärischem Restöl, Schieferöl, Teersandbitumen, Naphtha-Teerpech, Kohlenteerpech und Schwerölen, die durch Hydroraffination des Vorstehenden erhalten wurden.

**2.** Verfahren zur Herstellung eines rohen Koksmaterials, das in einem Kohlenstoffmaterial für eine negative Elektrode einer Lithiumionen-Sekundärbatterie gemäß Anspruch 1 verwendet wird, wobei das Verfahren die folgenden Schritte umfasst:

Aussetzen eines Schweröls einer Verkokung unter Verwendung eines verzögerten Verkokungsverfahrens bei einem Druck von 400 bis 800 kPa und bei 400 bis 600°C, um das rohe Koksmaterial unter Erzeugung des Wasserstoffgases, C1-Gases und C2-Gases zu bilden, wobei das Verhältnis der Summe der Erzeugungsraten (Massen-%) des Wasserstoffgases, des C1-Gases und des C2-Gases zur Bildungsrate (Massen-%) des rohen Koksmaterials die Bedingung erfüllt: Summe der Erzeugungsraten/Bildungsrate = 0,30 bis 0,60,
wobei das Schweröl ausgewählt ist aus der Gruppe, bestehend aus entschwefeltem und entasphaltiertem Erdöl, hydrodesulfuriertem Schweröl, flüssigem katalytischem Crackbodenöl, Vakuumrestöl (VR), kohleverflüssigtem Öl, Lösungsmittelextraktionsöl von Kohle, atmosphärischem Restöl, Schieferöl, Teersandbitumen, Naphtha-Teerpech, Kohlenteerpech und Schwerölen, die durch Hydroraffination des Vorstehenden erhalten wurden.

3. Verfahren zur Herstellung eines Kohlenstoffmaterials für eine negative Elektrode einer Lithiumionen-Sekundärbatterie gemäß Anspruch 1, umfassend die Schritte:

jeden Schritt des Verfahrens zur Herstellung eines rohen Koksmaterials nach Anspruch 2, um das rohe Koksmaterial zu erhalten;
Pulverisieren des rohen Koksmaterials, um ein rohes Koksmaterialpulver mit einer durchschnittlichen Teilchengröße von 30 μm oder weniger zu erhalten;
Kalzinieren des rohen Koksmaterialpulvers bei 1000 bis 1500°C zur Karbonisierung, um kalzinierten Koks mit einem durchschnittlichen Teilchendurchmesser von 5 bis 20 μm zu erhalten; und
gegebenenfalls Pulverisieren und Graphitisieren des kalzinierten Kokses bei einer Temperatur von 2200 bis 2800°C, um graphitierten Koks zu erhalten.

4. Verfahren zur Herstellung eines Kohlenstoffmaterials für eine negative Elektrode einer Lithiumionen-Sekundärbatterie nach Anspruch 3, wobei die Temperatur im Schritt der Graphitisierung 2300 bis 2800°C beträgt.

5. Lithiumionen-Sekundärbatterie, die das Kohlenstoffmaterial für eine negative Elektrode einer Lithiumionen-Sekundärbatterie nach Anspruch 1 verwendet.

## Revendications

1. Matériau carboné pour une électrode négative d'une batterie secondaire lithium-ion comprenant :

des particules ayant un diamètre de particules moyen de 5 à 20 μm et ayant une structure qui inclut une pluralité de plaques empilées et est incurvée en forme d'arc, les particules étant du coke calciné ou du coke graphitisé pouvant être obtenu dans un procédé comprenant les étapes de :

exposition d'une huile lourde à une cokéfaction au moyen d'un procédé de cokéfaction retardée à une pression de 400 à 800 kPa et à 400 à 600°C pour former un matériau de coke brut avec génération d'un gaz hydrogène, d'un gaz hydrocarboné ayant un atome de carbone (gaz C1), et d'un gaz hydrocarboné ayant deux atomes de carbone (gaz C2), dans lequel le rapport du total des taux de génération (% en masse) du gaz hydrogène, du gaz C1 et du gaz C2 au taux de formation (% en masse) du matériau de coke brut satisfait la condition : total des taux de génération/taux de formation = 0,30 à 0,60,
pulvérisation du matériau de coke brut pour obtenir une poudre de matériau de coke brut ayant une taille de particules moyenne de 30 μm ou moins,
calcination de la poudre de matériau de coke brut à 1 000 à 1 500°C pour la carbonisation pour obtenir du coke calciné, et
éventuellement pulvérisation et graphitisation du coke calciné à une température de 2 200 à 2 800°C pour obtenir du coke graphitisé,

dans lequel, dans chacune des plaques, une épaisseur de plaque moyenne est définie comme T, une hauteur d'arc moyenne incluant l'épaisseur de plaque est définie comme H, et une longueur moyenne dans la direction verticale est définie comme L,
L/T est de 5,0 ou plus et H/T est de 1,10 à 1,25, et
dans lequel l'huile lourde est choisie dans le groupe consistant en huile de pétrole désulfurée et désasphaltée, l'huile lourde hydrodésulfurée, l'huile de fond de craquage catalytique fluide, l'huile résiduelle sous vide (VR), l'huile de charbon liquéfié, l'huile de charbon d'extraction par solvant, l'huile résiduelle atmosphérique, l'huile de schiste, le bitume de sable bitumineux, le brai de goudron naphta, le brai de goudron de houille et les huiles

lourdes obtenues par hydroraffinage de ce qui précède.

**2.** Procédé de production d'un matériau de coke brut utilisé dans un matériau carboné pour une électrode négative d'un batterie secondaire lithium-ion selon la revendication 1, le procédé comprenant les étapes de :

exposition d'une huile lourde à une cokéfaction au moyen d'un procédé de cokéfaction retardée à une pression de 400 à 800 kPa et à 400 à 600°C pour former le matériau de coke brut avec génération d'un gaz hydrogène, d'un gaz C1 et d'un gaz C2, dans lequel le rapport du total des taux de génération (% en masse) du gaz hydrogène, du gaz C1 et du gaz C2 au taux de formation (% en masse) du matériau de coke brut satisfait la condition : total des taux de génération/taux de formation = 0,30 à 0,60,
dans lequel l'huile lourde est choisie dans le groupe consistant en l'huile de pétrole désulfurée et désasphaltée, l'huile lourde hydrodésulfurée, l'huile de fond de craquage catalytique fluide, l'huile résiduelle sous vide (VR), l'huile de charbon liquéfié, l'huile de charbon d'extraction par solvant, l'huile résiduelle atmosphérique, l'huile de schiste, le bitume de sable bitumineux, le brai de goudron naphta, le brai de goudron de houille et les huiles lourdes obtenues par hydroraffinage de ce qui précède.

**3.** Procédé de production d'un matériau carboné pour une électrode négative d'une batterie secondaire lithium-ion selon la revendication 1 comprenant les étapes de :

chaque étape du procédé de production d'un matériau de coke brut selon la revendication 2 pour obtenir le matériau de coke brut ;
pulvérisation du matériau de coke brut pour obtenir une poudre de matériau de coke brut ayant une taille de particules moyenne de 30 μm ou moins ;
calcination de la poudre de matériau de coke brut à 1 000 à 1 500°C pour la carbonisation pour obtenir du coke calciné ayant un diamètre de particules moyen de 5 à 20 μm ; et
éventuellement pulvérisation et graphitisation du coke calciné à une température de 2 200 à 2 800°C pour obtenir du coke graphitisé.

**4.** Procédé de production d'un matériau carboné pour une électrode négative d'une batterie secondaire lithium-ion selon la revendication 3, dans lequel la température dans l'étape de graphitisation est de 2 300 à 2 800°C.

**5.** Batterie secondaire lithium-ion utilisant le matériau carboné pour une électrode négative d'une batterie secondaire lithium-ion selon la revendication 1.

FIG.1

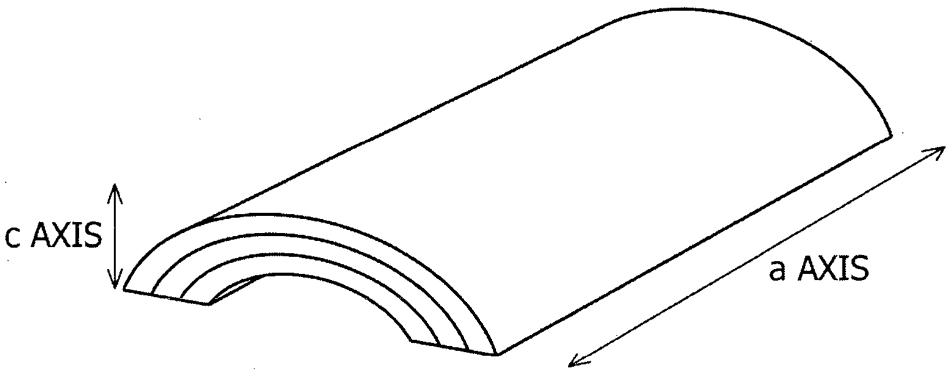


FIG.2(a)

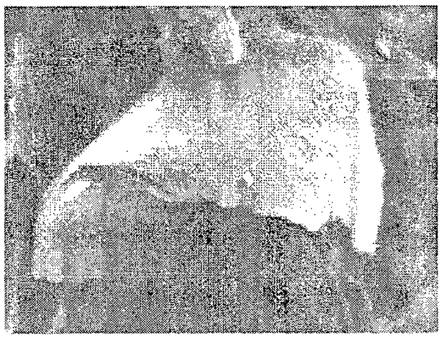

FIG.2(b)

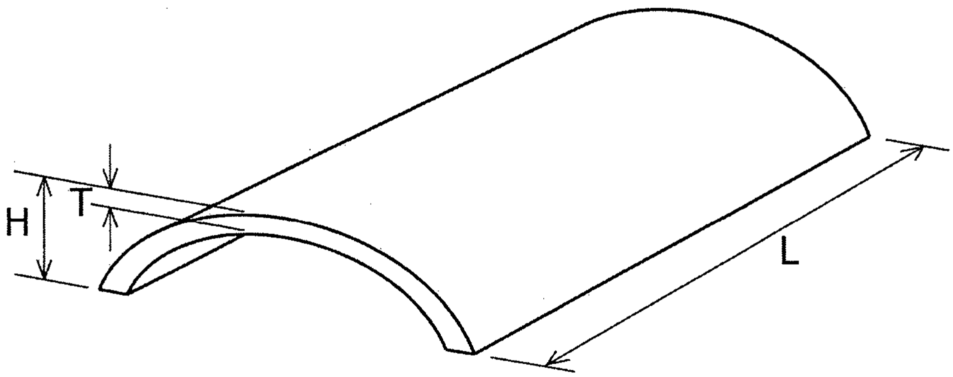

FIG.3

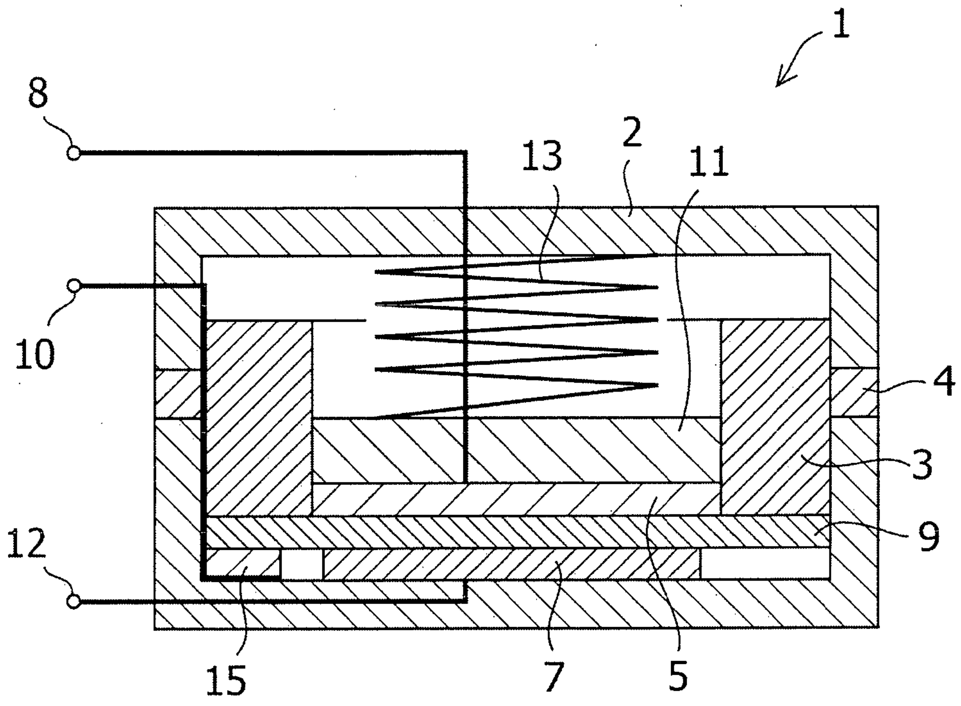


FIG.4

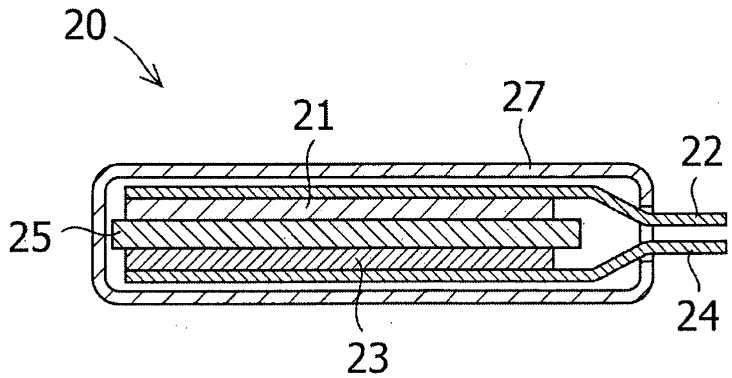

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009087871 A

### Non-patent literature cited in the description


- *Proceedings of the 48th Battery Symposium in Japan,* 13 November 2007, vol. 1A11
- *Proceedings of the 76th Meeting of the Electrochemical Society of Japan,* 26 March 2009, vol. 1P29
- *Proceedings of the 71st Meeting of the Electrochemical Society of Japan,* 24 March 2004, vol. 2I07
- *Proceedings of the 23rd Annual Meeting of the Carbon Society of Japan,* 03 December 1996, vol. 1C14
- *Proceedings of the 29th Annual Meeting of the Carbon Society of Japan,* 04 December 2002, vol. 2C08
- **MINORU NAKAMIZO.** *TANSO,* 1977, 105
- **J. O. BESENHARD ; M. WINTER ; J. YANG ; W. BIBERACHER.** *J. Power Sources,* 1995, vol. 54, 228
- *Proceedings of the 35th Battery Symposium in Japan,* 14 November 1994, vol. 2B04